# EUROPEAN PATENT APPLICATION

(11) **EP 3 327 058 A1**
(43) Date of publication of application: **30.05.2018**
(21) Application number: 16827738.2
(22) Date of filing: 15.07.2016
(51) Int. Cl.: C08G 18/72, B29C 39/02, B29C 70/16, C08J 5/04

(54) **HARD POLYURETHANE RESIN COMPOSITION, HARD POLYURETHANE RESIN, MOLDED ARTICLE, AND FIBER-REINFORCED PLASTIC**

(30) Priority: 17.07.2015 JP 2015142695; 11.04.2016 JP 2016078688
(71) Applicant: Mitsui Chemicals, Inc., Minato-ku Tokyo 105-7122 (JP)
(72) Inventor: KANAYAMA, Hiroshi, Sodegaura-shi Chiba 299-0265 (JP); WATANABE, Minoru, Sodegaura-shi Chiba 299-0265 (JP); KAJIURA, Makoto, Sodegaura-shi Chiba 299-0265 (JP); KAGEOKA, Masakazu, Sodegaura-shi Chiba 299-0265 (JP); YAMASAKI, Satoshi, Sodegaura-shi Chiba 299-0265 (JP); TANAKA, Toshihiro, Sodegaura-shi Chiba 299-0265 (JP)
(74) Representative: Hoffmann Eitle
(86) International application number: PCT/JP2016/070968
(87) International publication number: WO 2017/014178

(57) **Abstract**

A rigid polyurethane resin composition contains a polyisocyanate component containing polyphenylmethane polyisocyanate and alicyclic polyisocyanate, and a polyol component. In the polyisocyanate component, the ratio of an isocyanate group derived from the alicyclic polyisocyanate with respect to the total amount of an isocyanate group derived from the polyphenylmethane polyisocyanate and the isocyanate group derived from the alicyclic polyisocyanate is 10 to 70 mol%.

## Description

### TECHNICAL FIELD

The present invention relates to a rigid polyurethane resin composition, a rigid polyurethane resin, a molded article, and a fiber reinforced plastic, to be specific, to a rigid polyurethane resin composition, a rigid polyurethane resin made of the rigid polyurethane resin composition, a molded article made of the rigid polyurethane resin, and a fiber reinforced plastic in which the rigid polyurethane resin composition is impregnated with a fiber.

### BACKGROUND ART

A rigid polyurethane resin is light in weight compared to metals or the like, and in excellent in various properties such as heat resistance and mechanical strength, so that it has been often used as, for example, outer plate members (outer plate panels or the like) of automobiles and structural members (body frame or the like) of automobiles.

To improve the mechanical strength of the member, for example, it has been known that the rigid polyurethane resin is used as a fiber reinforced plastic by being impregnated with fibers such as glass fiber and carbon fiber to then cure.

As the fiber reinforced plastic, for example, a fiber reinforced plastic obtained by injecting a mixture of polyphenylene polymethylene polyisocyanate, glycerin-based polyether polyol, and ethylene glycol into a mold in which a fiber glass is placed to be subjected to mold closing has been proposed (ref: for example, Patent Document 1).

### Citation List

### Patent Document

Patent Document 1: Japanese Unexamined Patent Publication No. H2-202509

### SUMMARY OF THE INVENTION

### PROBLEM TO BE SOLVED BY THE INVENTION

Meanwhile, the polyphenylene polymethylene polyisocyanate used in Patent Document 1 does not have sufficient compatibility with polyol, so that after mixing the polyphenylene polymethylene polyisocyanate with the polyol, they may be re-separated to remain as an unreacted component in the rigid polyurethane resin and thus, the mechanical properties of the rigid polyurethane resin may be reduced.

In the production of the rigid polyurethane resin and the fiber reinforced plastic, in view of workability and fluidity of the rigid polyurethane resin composition at the inside of a mold, an appropriate pot life is required. However, when the polyphenylene polymethylene polyisocyanate is used, there may be a case where the pot life is short, and the workability and the fluidity of the rigid polyurethane resin composition at the inside of the mold are poor.

Also, the rigid polyurethane resin and the fiber reinforced plastic may further require the heat resistance.

An object of the present invention is to provide a rigid polyurethane resin composition having an appropriate pot life and excellent compatibility of a polyisocyanate component with a polyol component, and capable of obtaining a rigid polyurethane resin and a molded article having excellent mechanical properties and heat resistance; the rigid polyurethane resin made of the rigid polyurethane resin composition; the molded article made of the rigid polyurethane resin; and a fiber reinforced plastic in which the rigid polyurethane resin composition is impregnated with a fiber.

### MEANS FOR SOLVING THE PROBLEM

The present invention [1] includes a rigid polyurethane resin composition containing a polyisocyanate component containing polyphenylmethane polyisocyanate and alicyclic polyisocyanate, and a polyol component, wherein in the polyisocyanate component, the ratio of an isocyanate group derived from the alicyclic polyisocyanate with respect to the total amount of an isocyanate group derived from the polyphenylmethane polyisocyanate and the isocyanate group derived from the alicyclic polyisocyanate is 10 to 70 mol%.

The present invention [2] includes the rigid polyurethane resin composition described in the above-described [1], wherein the polyphenylmethane polyisocyanate contains diphenylmethane diisocyanate, and the ratio of an isocyanate group derived from the diphenylmethane diisocyanate with respect to the total amount of the isocyanate group derived from the polyphenylmethane polyisocyanate is 30 mol% or more and 80 mol% or less.

The present invention [3] includes the rigid polyurethane resin composition described in the above-described [2], wherein the ratio of the isocyanate group derived from the diphenylmethane diisocyanate with respect to the total amount of the isocyanate group derived from the polyphenylmethane polyisocyanate is 30 mol% or more and 60 mol% or less.

The present invention [4] includes the rigid polyurethane resin composition described in any one of the above-described [1] to [3], wherein the polyol component has an average functionality of 2 or more and an average hydroxyl value of 400 mgKOH/g or more.

The present invention [5] includes the rigid polyurethane resin composition described in the above-described [4], wherein the polyol component has an average functionality of 3 or more.

The present invention [6] includes the rigid polyurethane resin composition described in any one of the above-described [1] to [5], wherein the alicyclic polyisocyanate is at least one kind selected from the group consisting of 1,3-bis(isocyanatomethyl) cyclohexane, 1,4-bis(isocyanatomethyl) cyclohexane, 2,5-di(isocyanatomethyl) bicyclo[2.2.1] heptane, 2,6-di(isocyanatomethyl) bicyclo[2.2.1] heptane, and isophorone diisocyanate.

The present invention [7] includes a rigid polyurethane resin containing a cured product of the rigid polyurethane resin composition described in any one of the above-described [1] to [6].

The present invention [8] includes a molded article made of the rigid polyurethane resin described in the above-described [7].

The present invention [9] includes a fiber reinforced plastic made of a fiber and a cured product of the rigid polyurethane resin composition described in any one of the above-described [1] to [6] impregnated with the fiber.

The present invention [10] includes the fiber reinforced plastic described in the above-described [9], wherein the fiber is made of at least one or more kinds selected from the group consisting of carbon fiber, glass fiber, and aramid fiber.

The present invention [11] includes the fiber reinforced plastic described in the above-described [9] or [10] obtained by a RTM method, a HP-RTM method, and/or a RIM method.

### EFFECT OF THE INVENTION

In the rigid polyurethane resin composition of the present invention, the polyisocyanate component contains the polyphenylmethane polyisocyanate and the alicyclic polyisocyanate at a predetermined ratio, so that the rigid polyurethane resin composition that has an appropriate pot life and excellent compatibility of the polyisocyanate component with the polyol component, and is capable of obtaining the rigid polyurethane resin and the molded article having excellent mechanical properties and heat resistance can be obtained.

The rigid polyurethane resin and the molded article of the present invention are made of the rigid polyurethane resin composition of the present invention, and in the fiber reinforced plastic of the present invention, the rigid polyurethane resin composition of the present invention is impregnated with the fiber and cures, so that excellent mechanical properties and heat resistance can be achieved.

### BRIEF DESCRIPTION OF THE DRAWINGS

FIG. 1 shows a graph illustrating a relationship of the ratio of an isocyanate group derived from alicyclic polyisocyanate in a polyisocyanate component with the bending elastic modulus of a rigid polyurethane resin.
FIG. 2 shows a graph illustrating a relationship of the ratio of an isocyanate group derived from alicyclic polyisocyanate in a polyisocyanate component with the pot life of a rigid polyurethane resin composition.

### DESCRIPTION OF EMBODIMENTS

A rigid polyurethane resin composition of the present invention contains a polyisocyanate component and a polyol component. Although the details are described later, the polyisocyanate component reacts with the polyol component, so that a rigid polyurethane resin as a cured product can be obtained.

The rigid polyurethane resin is a polyurethane resin having high rigidity, a relatively high glass transition temperature, and excellent heat resistance. To be specific, the rigid polyurethane resin has a glass transition temperature of, for example, 70°C or more, preferably 90°C or more, more preferably 110°C or more, further more preferably 120°C or more, and usually 220°C or less.

The measurement method of the glass transition temperature is in conformity with Examples to be described later.

In the present invention, the polyisocyanate component contains polyphenylmethane polyisocyanate and alicyclic polyisocyanate, and preferably consists of the polyphenylmethane polyisocyanate and the alicyclic polyisocyanate.

The polyphenylmethane polyisocyanate (p-MDI) can be obtained by a known method, to be specific, for example, obtained by phosgenation of polymeric methylenedianiline that is obtained by condensation reaction of aniline with formalin. The polyphenylmethane polyisocyanate is also generally referred to as polymeric MDI, crude MDI, and polymethylene polyphenyl polyisocyanate.

The polyphenylmethane polyisocyanate usually contains diphenylmethane diisocyanate (monomer). That is, the polyphenylmethane polyisocyanate is prepared as a composition containing the diphenylmethane diisocyanate (monomer) and a condensate of the diphenylmethane diisocyanate (oligomer, polymer).

Examples of the diphenylmethane diisocyanate (MDI) include 4,4'-diphenylmethane diisocyanate, 2,4'-diphenylmethane diisocyanate, and 2,2'-diphenylmethane diisocyanate.

The content ratio of the diphenylmethane diisocyanate in the polyphenylmethane polyisocyanate is, for example, calculated as the ratio of an isocyanate group derived from the diphenylmethane diisocyanate (monomer) with respect to the total amount of an isocyanate group in the polyphenylmethane polyisocyanate (that is, the total amount of the isocyanate group derived from the diphenylmethane diisocyanate (monomer) and an isocyanate group derived from the condensate of the diphenylmethane diisocyanate (oligomer, polymer)).

To be specific, the ratio of the isocyanate group derived from the diphenylmethane diisocyanate with respect to the total amount of the isocyanate group derived from the polyphenylmethane polyisocyanate is, for example, 10 mol% or more, preferably 20 mol% or more, more preferably 30 mol% or more, further more preferably 40 mol% or more, and for example, 80 mol% or less, preferably 70 mol% or less, more preferably 60 mol% or less, further more preferably 50 mol% or less.

When the content ratio of the diphenylmethane diisocyanate is within the above-described range, a rigid polyurethane resin composition having an appropriate pot life and excellent compatibility with a polyol component, and capable of obtaining a rigid polyurethane resin and a molded article having excellent mechanical properties and heat resistance can be obtained.

The ratio of the isocyanate group derived from the diphenylmethane diisocyanate with respect to the total amount of the isocyanate group derived from the polyphenylmethane polyisocyanate is obtained in conformity with Examples to be described later.

Examples of the alicyclic diisocyanate include alicyclic diisocyanates such as 1,3-cyclopentane diisocyanate, 1,3-cyclopentene diisocyanate, cyclohexane diisocyanate (1,3- or 1,4-cyclohexane diisocyanate or a mixture thereof), 1,3- or 1,4-bis(isocyanatomethyl) cyclohexane or a mixture thereof (H₆XDI), 2,5- or 2,6-di(isocyanatomethyl) bicyclo[2.2.1] heptane or a mixture thereof (bis(isocyanatomethyl) norbornane, NBDI), 3-isocyanatomethyl-3,5,5-trimethylcyclohexyl isocyanate (isophorone diisocyanate) (IPDI), methylenebis(cyclohexyl isocyanate) (4,4'-, 2,4'-, or 2,2'- methylenebis(cyclohexyl isocyanate, trans, trans-form, trans, cis-form, cis, cis-form thereof, or a mixture thereof)) (H₁₂MDI), and methylcyclohexane diisocyanate (methyl-2,4-cyclohexane diisocyanate, methyl-2,6-cyclohexane diisocyanate).

These alicyclic polyisocyanates can be used alone or in combination of two or more.

As the alicyclic polyisocyanate, preferably, 1,3-bis(isocyanatomethyl) cyclohexane, 1,4-bis(isocyanatomethyl) cyclohexane, 2,5-di(isocyanatomethyl) bicyclo[2.2.1] heptane, 2,6-di(isocyanatomethyl) bicyclo[2.2.1] heptane, and isophorone diisocyanate are used.

In other words, the alicyclic polyisocyanate is preferably at least one kind selected from the group consisting of 1,3-bis(isocyanatomethyl) cyclohexane, 1,4-bis(isocyanatomethyl) cyclohexane, 2,5-di(isocyanatomethyl) bicyclo[2.2.1] heptane, 2,6-di(isocyanatomethyl) bicyclo[2.2.1] heptane, and isophorone diisocyanate.

When these are used, the rigid polyurethane resin composition has the appropriate pot life and excellent compatibility of the polyisocyanate component with the polyol component, and the rigid polyurethane resin and the molded article having excellent mechanical properties and heat resistance can be obtained.

As the alicyclic polyisocyanate, more preferably, 2,5-di(isocyanatomethyl) bicyclo[2.2.1] heptane, 2,6-di(isocyanatomethyl) bicyclo[2.2.1] heptane, and 1,4-bis(isocyanatomethyl) cyclohexane are used.

In the polyisocyanate component, the content ratio of the polyphenylmethane polyisocyanate to the alicyclic polyisocyanate is, for example, calculated as the ratio of the isocyanate group derived from the polyphenylmethane polyisocyanate to an isocyanate group derived from the alicyclic polyisocyanate.

To be specific, the ratio of the isocyanate group derived from the alicyclic polyisocyanate with respect to the total amount of the isocyanate group derived from the polyphenylmethane polyisocyanate and the isocyanate group derived from the alicyclic polyisocyanate is, for example, 10 mol% or more, preferably 15 mol% or more, more preferably 20 mol% or more, and for example, 70 mol% or less, preferably 60 mol% or less, more preferably 50 mol% or less. The ratio of the isocyanate group derived from the polyphenylmethane polyisocyanate is, for example, 30 mol% or more, preferably 40 mol% or more, more preferably 50 mol% or more, and for example, 90 mol% or less, preferably 85 mol% or less, more preferably 80 mol% or less.

When the content ratio of the polyphenylmethane polyisocyanate and the alicyclic polyisocyanate is within the above-described range, the rigid polyurethane resin composition has the appropriate pot life and excellent compatibility of the polyisocyanate component with the polyol component, and the rigid polyurethane resin and the molded article having excellent mechanical properties and heat resistance can be obtained.

To be specific, the ratio of the isocyanate group derived from the alicyclic polyisocyanate with respect to the total amount of the isocyanate group derived from the polyphenylmethane polyisocyanate and the isocyanate group derived from the alicyclic polyisocyanate is obtained in conformity with Examples to be described later.

The polyisocyanate component can also contain, in addition to the above-described polyphenylmethane polyisocyanate and the above-described alicyclic polyisocyanate, furthermore, a carbodiimide derivative of the polyphenylmethane polyisocyanate and/or the diphenylmethane diisocyanate.

That is, the polyisocyanate component preferably consists of the polyphenylmethane polyisocyanate, the alicyclic polyisocyanate, and the carbodiimide derivative of the polyphenylmethane polyisocyanate and/or the diphenylmethane diisocyanate.

The carbodiimide derivative of the polyphenylmethane polyisocyanate and/or the disphenylmethane diisocyanate can be, for example, obtained by subjecting the above-described polyphenylmethane polyisocyanate and/or the above-described diphenylmethane diisocyanate to decarboxylation condensation by a known method.

When the polyisocyanate component contains the carbodiimide derivative of the polyphenylmethane polyisocyanate and/or the disphenylmethane diisocyanate, in the case of the production of the fiber reinforced plastic, improvement of the adhesive strength of the rigid polyurethane resin with the fiber can be achieved.

The mixing ratio of the carbodiimide derivative of the polyphenylmethane polyisocyanate and/or the diphenylmethane diisocyanate is not particularly limited, and is, for example, 0.1 mass% or more, preferably 1 mass% or more, and for example, 10 mass% or less, preferably 7 mass% or less with respect to the total amount of the polyisocyanate component.

The content ratio of the isocyanate group (concentration of the isocyanate group) in the polyisocyanate component is, for example, 30 mass% or more, preferably 32 mass% or more, and for example, 40 mass% or less, preferably 35 mass% or less.

Examples of the polyol component include high molecular weight polyols and low molecular weight polyols.

The high molecular weight polyol is a compound having two or more hydroxyl groups and having a number average molecular weight of 500 or more and 10000 or less. Examples thereof include polyether polyols, polyester polyols, polyester amide polyols, polycarbonate polyols, polyurethane polyols, epoxy polyols, vegetable oil polyols, polyolefin polyols, acrylic polyols, and vinyl monomer-modified polyols. Preferably, polyether polyols, polyester polyols, polycarbonate polyols, and polyurethane polyols are used.

Examples of the polyether polyol include polyoxyalkylene (carbon number (C) of 2 to 3) polyols and polytetramethylene ether glycols.

The polyoxyalkylene (C2 to C3) polyol is a polyoxylalkylene polyol having a carbon number of the alkylene oxide of 2 to 3, and examples thereof include addition polymers (including random and/or block copolymer of two or more alkylene oxides) of the alkylene oxide such as ethylene oxide and propylene oxide with a low molecular weight polyol to be described later or a low molecular weight amine to be described later as an initiator.

That is, to be specific, examples of the polyoxyalkylene (C2 to C3) polyol include polyoxyethylene polyol, polyoxypropylene polyol, and random and/or block copolymers of polyoxyethylene and polyoxypropylene.

The functionality (number of hydroxyl groups) of the polyoxyalkylene (C2 to C3) polyol is determined in accordance with the functionality of the initiator. When the initiator having a functionality of 2 is used, for example, the polyoxyalkylene diol having an average functionality of 2 is obtained. When the initiator having a functionality of 3 is used, for example, the polyoxyalkylene triol having an average functionality of 3 is obtained. When the initiator having a functionality of 4 is used, for example, the polyoxyalkylene tetraol having an average functionality of 4 is obtained.

The polyoxyalkylene (C2 to C3) polyol includes polytrimethylene ether glycol. Examples of the polytrimethylene ether glycol include polyols produced by condensation polymerization of 1,3-propanediol derived from plants.

Examples of the polytetramethylene ether glycol include ring-opening polymers obtained by cation polymerization of tetrahydrofuran and amorphous polytetramethylene ether glycols obtained by copolymerizing a polymerization unit of the tetrahydrofuran with a dihydric alcohol to be described later.

Also, examples thereof include polytetramethylene ether glycols derived from plants with tetrahydrofuran produced based on a plant-derived material such as furfural as a starting material.

Examples of the polyester polyol include polycondensates obtained by subjecting a low molecular weight polyol (preferably, dihydric alcohol) to be described later and a polybasic acid to esterification under known conditions.

Examples of the polybasic acid include saturated aliphatic dicarboxylic acids such as oxalic acid, malonic acid, succinic acid, methylsuccinic acid, glutaric acid, adipic acid, 1,1-dimethyl-1,3-dicarboxypropane, 3-methyl-3-ethylglutaric acid, azelaic acid, sebacic acid, and other saturated aliphatic dicarboxylic acid (carbon number of 11 to 13); unsaturated aliphatic dicarboxylic acids such as maleic acid, fumaric acid, itaconic acid, and others; aromatic dicarboxylic acids such as orthophthalic acid, isophthalic acid, terephthalic acid, toluene dicarboxylic acid, naphthalene dicarboxylic acid, and others; alicyclic dicarboxylic acids such as hexahydrophthalic acid and others; other carboxylic acids such as dimer acid, hydrogenated dimer acid, HET acid, and others; anhydrides derived from the carboxylic acids such as oxalic anhydrides, succinic anhydrides, maleic anhydrides, phthalic anhydrides, 2-alkyl (C12 to C18) succinic anhydrides, tetrahydrophthalic anhydrides, and trimellitic anhydrides; and furthermore, acid halides derived from the carboxylic acids such as oxalyl dichlorides, adipic acid dichlorides, and sebacic acid dichlorides.

Examples of the polyester polyol include vegetable oil-based polyester polyols obtained by subjecting the low molecular weight polyol to be described later and the hydroxy carboxylic acid such as hydroxyl group-containing vegetable oil fatty acid (for example, castor oil fatty acid containing ricinoleic acid, hydrogenated castor oil fatty acid containing 12-hydroxystearic acid, or the like) to condensation reaction under known conditions.

Examples of the polyester polyol include polycaprolactone polyols and polyvalerolactone polyols obtained by subjecting lactones such as ε-caprolactone and γ-valerolactone to ring-opening polymerization with the low molecular weight polyol (preferably, dihydric alcohol) to be described later as the initiator, and furthermore, lactone polyester polyols obtained by copolymerizing these with the dihydric alcohol to be described later.

Examples of the polycarbonate polyol include ring-opening polymers of ethylene carbonate with the low molecular weight polyol (preferably, dihydric alcohol) to be described later as the initiator and amorphous polycarbonate polyols obtained by copolymerizing the dihydric alcohols such as 1,4-butanediol, 1,5-pentanediol, 3-methyl-1,5-pentanediol, and 1,6-hexanediol with the ring-opening polymer.

Examples of the polycarbonate polyol include polycarbonate polyols derived from plants. To be specific, examples thereof include polycarbonate polyols obtained by subjecting alicyclic dihydroxy compounds such as isosorbide derived from glucose that is a plant-derived material and the low molecular weight polyol to be described later to transesterification with diphenyl carbonate.

The polyurethane polyol can be obtained as polyester polyurethane polyol, polyether polyurethane polyol, polycarbonate polyurethane polyol, polyester polyether polyurethane polyol, or the like by allowing the polyether polyol, the polyester polyol, and/or the polycarbonate polyol obtained by the description above to react with a known polyisocyanate compound at an equivalent ratio (OH/NCO) of the hydroxyl group to the isocyanate group of above 1.

As the high molecular weight polyol, preferably, polyether polyol is used, more preferably, polyoxyalkylene (C2 to C3) polyol is used.

The low molecular weight polyol is a compound having two or more hydroxyl groups and having a molecular weight of 60 or more and below 500. Examples thereof include dihydric alcohols such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethylpentanediol, 3,3-dimethylolheptane, alkane (C7 to C20) diol, 1,3- or 1,4-cyclohexanedimethanol and a mixture thereof, 1,3- or 1,4-cyclohexanediol and a mixture thereof, hydrogenated bisphenol A, 1,4-dihydroxy-2-butene, 2,6-dimethyl-1-octene-3,8-diol, bisphenol A, diethylene glycol, triethylene glycol, and dipropylene glycol; trihydric alcohols such as glycerin, trimethylol propane, and triisopropanolamine; tetrahydric alcohols such as tetramethylolmethane (pentaerythritol) and diglycerin; pentahydric alcohols such as xylitol; hexahydric alcohols such as sorbitol, mannitol, allitol, iditol, dulcitol, altritol, inositol, and dipentaerythritol; heptahydric alcohols such as perseitol; and octahydric alcohols such as sucrose.

An example of the low molecular weight polyol includes a low molecular weight polyoxyalkylene polyol having a molecular weight of 60 or more and below 500 obtained by subjecting alkylene oxide such as ethylene oxide and/or propylene oxide to addition reaction with the above-described dihydric to octahydric alcohols and a known low molecular weight polyamine as an initiator. To be specific, examples thereof include low molecular weight polyoxyethylene polyols, low molecular weight polyoxypropylene polyols, and low molecular weight polyoxyethylene polyoxypropylene polyols (random or block copolymers).

The functionality of the low molecular weight polyoxyalkylene polyol is determined in accordance with the functionality of the initiator. When the initiator having a functionality of 2 is used, for example, the polyoxyalkylene diol having an average functionality of 2 is obtained. When the initiator having a functionality of 3 is used, for example, the polyoxyalkylene triol having an average functionality of 3 is obtained. When the initiator having a functionality of 4 is used, for example, the polyoxyalkylene tetraol having an average functionality of 4 is obtained.

These low molecular weight polyols can be used alone or in combination of two or more.

These polyol components can be used alone or in combination of two or more.

As the polyol component, preferably, a low molecular weight polyol is used, more preferably, a low molecular weight polyoxyalkylene polyol having a molecular weight of 60 or more and below 500 is used, further more preferably, a low molecular weight polyoxyalkylene polyol having a molecular weight of 100 or more and 400 or less is used, further more preferably, a low molecular weight polyoxypropylene polyol is used, particularly preferably, a low molecular weight polyoxypropylene polyol having an average functionality of 3 or 4 is used.

When the polyol component is used, the rigid polyurethane resin composition has the appropriate pot life and excellent compatibility of the polyisocyanate component with the polyol component, and the rigid polyurethane resin and the molded article having excellent mechanical properties and heat resistance can be obtained.

The average functionality of the polyol component is, for example, 2.0 or more, preferably 2.5 or more, more preferably 3.0 or more, and for example, 5.0 or less, preferably 4.5 or less, more preferably 4.0 or less, further more preferably 3.5 or less.

When the average functionality of the polyol component is within the above-described range, the rigid polyurethane resin composition has the appropriate pot life and excellent compatibility of the polyisocyanate component with the polyol component, and the rigid polyurethane resin and the molded article having excellent mechanical properties and heat resistance can be obtained.

The average hydroxyl value of the polyol component is, for example, 300 mgKOH/g or more, preferably 400 mgKOH/g or more, further more preferably 500 mgKOH/g or more, and for example, 1200 mgKOH/g or less, preferably 1000 mgKOH/g or less, more preferably 900 mgKOH/g or less.

When the average hydroxyl value of the polyol component is within the above-described range, the rigid polyurethane resin composition has the appropriate pot life and excellent compatibility of the polyisocyanate component with the polyol component, and the rigid polyurethane resin and the molded article having excellent mechanical properties and heat resistance can be obtained.

The average functionality of the polyol component can be calculated from the charged component, and the average hydroxyl value can be obtained by a known titration method.

The rigid polyurethane resin composition can further contain a known additive as an arbitrary component at an appropriate ratio. Examples thereof include catalysts, stabilizers, release agents, fillers, impact absorption fine particles, hydrolysis inhibitors, dehydrating agents, flame retardants, and acidic compounds.

The catalyst is not particularly limited, and a known urethane-formation catalyst is used. To be specific, examples thereof include amines and organic metal compounds.

Examples of the amines include tertiary amines such as triethylamine, triethylenediamine, bis-(2-dimethylaminoethyl) ether, and N-methylmorpholine; quaternary ammonium salts such as tetraethylhydroxylammonium, N,N,N-trimethyl-N-hydroxypropylammonium, 2-ethylhexanoic acid salt, 2-hydroxyethyl-trimethylammoniumoctylic acid salt, and 2,4,6-tris(dimethylaminomethyl) phenol; and imidazoles such as imidazole and 2-ethyl-4-methylimidazole. These amines can be used alone or in combination of two or more.

The amines can be available as a commercially available product. Examples thereof include KAOLIZER No. 31 (manufactured by Kao Corporation), KAOLIZER No. 120 (manufactured by Kao Corporation), KAOLIZER No. 12 (manufactured by Kao Corporation), KAOLIZER No. 25 (manufactured by Kao Corporation), DABCO 33LV (diethylene glycol solution with a concentration of 33 mass% triethylenediamine, manufactured by Air Products Japan K.K.), Niax A-1 (manufactured by Momentive Performance Materials Inc. (hereinafter, referred to as "manufactured by Momentive")), TOYOCAT-NCE (manufactured by TOSOH CORPORATION), DABCO-TMR (manufactured by Air Products Japan K.K.), DABCO-TMR2 (manufactured by Air Products Japan K.K.), DABCO-TMR30, and DABCO-JXP-509 (manufactured by Air Products Japan K.K.).

Examples of the organic metal compound include organic tin compounds such as tin acetate, tin octylate, tin oleate, tin laurate, dibutyltin diacetate, dimethyltin dilaurate, dibutyltin dilaurate, dibutyltin dimercaptide, dibutyltin maleate, dibutyltin dineodecanoate, dioctyltin dimercaptide, dioctyltin dilaurate, and dibutyltin dichloride; organic lead compounds such as lead octanoate and lead naphthenate; organic nickel compounds such as nickel naphthenate; organic cobalt compounds such as cobalt naphthenate; organic copper compounds such as copper octenoate; and organic bismuth compounds such as bismuth octylate and bismuth neodecanoate. These organic metal compounds can be used alone or in combination of two or more.

The organic metal compound can be available as a commercially available product. Examples thereof include NEOSTANN U-100 (organic tin compound, manufactured by NITTO KASEI CO., LTD.), Formate TK-1 (organic tin compound, manufactured by OSAKA SHINYAKU CO., LTD.), Formrez UL-28 (organic tin compound, manufactured by Momentive), and Stanoct (organic tin compound, manufactured by Mitsubishi Chemical Corporation).

Furthermore, examples of the catalyst include potassium salts such as potassium carbonate, potassium acetate, and potassium octylate (for example, DABCO K-15 manufactured by Air Products Japan K.K. and Potassium Hexoate 13% manufactured by TOEI CHEMICAL INDUSTRY CO., LTD.).

These catalysts (amines and organic metal compounds) can be used alone or in combination of two or more.

The mixing ratio of the catalyst (active component amount based on 100%) with respect to 100 parts by mass of the polyol component is, for example, 0.001 parts by mass or more, preferably 0.01 parts by mass or more, more preferably 0.1 parts by mass or more, and for example, 10 parts by mass or less, preferably 5 parts by mass or less.

When the mixing ratio of the catalyst is within the above-described range, the rigid polyurethane resin composition has the appropriate pot life and excellent compatibility of the polyisocyanate component with the polyol component, and the rigid polyurethane resin and the molded article having excellent mechanical properties and heat resistance can be obtained.

Examples of the stabilizer include antioxidants, ultraviolet absorbers, thermal stabilizers, and light stabilizers.

Examples of the antioxidant include hindered phenol antioxidants (for example, 4-methyl-2,6-di-tert-butylphenol (BHT), triethylene glycol-bis[3-(3-t-butyl-5-methyl-4-hydroxyphenyl) propionate], pentaerythritoltetrakis[3-(3,5-di-t-butyl-4-hydroxyphenyl) propionate], or the like) and other antioxidants (for example, antioxidants excluding the hindered phenol antioxidants such as phosphorus antioxidants such as bis(2,4-di-t-butylphenyl) pentaerythritol diphosphite, tridecyl phosphite, and tris(2-ethylhexyl) phosphite and thiophene antioxidants such as 2,5-thiophenediylbis(5-t-butyl-1,3-benzoxazole)).

Of the antioxidants, preferably, phosphorus antioxidants are used, more preferably, tris(2-ethylhexyl) phosphite is used. A commercially available product can be used as the tris(2-ethylhexyl) phosphite, and an example thereof includes JP-308E (manufactured by JOHOKU CHEMICAL CO., LTD., trade name).

These antioxidants can be used alone or in combination of two or more.

Examples of the ultraviolet absorber include benzophenone-type, benzotriazole-type, triazine-type, and cyanoacrylate-type ultraviolet absorbers.

These ultraviolet absorbers can be used alone or in combination of two or more.

An example of the thermal stabilizer includes a compound containing a sulfonamide group.

Examples of the compound containing a sulfonamide group include aromatic sulfonamides and aliphatic sulfonamides. Preferably, o-toluene sulfonamide is used.

These thermal stabilizers can be used alone or in combination of two or more.

Examples of the light stabilizer include hindered amine light resistance stabilizers and blend light resistance stabilizers. Preferably, hindered amine light resistance stabilizers are used. Examples thereof include ADEKA STAB LA62 and ADEKA STAB LA67 (hereinabove, manufactured by Adeka Argus Chemical Co., Ltd., trade name), and Tinuvin 765, Tinuvin 144, Tinuvin 770, and Tinuvin 622 (hereinabove, manufactured by BASF Japan Ltd., trade name).

These light stabilizers can be used alone or in combination of two or more.

These stabilizers can be used alone or in combination of two or more. As the stabilizer, preferably, antioxidants and light stabilizers are used.

The mixing ratio of the stabilizer with respect to 100 parts by mass of the polyol component is, for example, 0.01 parts by mass or more, preferably 0.3 parts by mass or more, and for example, 10 parts by mass or less, preferably 5 parts by mass or less.

The release agent is not particularly limited, and for example, a known internal release agent is used. To be more specific, examples thereof include stearates such as stearic acid, hydroxystearic acid, zinc stearate, aluminum stearate, magnesium stearate, and calcium stearate; soybean oil lecithin; silicone oil; fatty acid ester; and fatty acid alcohol dibasic acid esters.

These release agents can be used alone or in combination of two or more.

The mixing ratio of the release agent with respect to 100 parts by mass of the polyol component is, for example, 0.01 parts by mass or more, preferably 0.1 parts by mass or more, and for example, 10 parts by mass or less, preferably 5 parts by mass or less.

When the mixing ratio of the release agent is within the above-described range, the release effect can be sufficiently developed, and the bleed out of the molded article can be suppressed.

The filler is not particularly limited, and a known filler is used. To be specific, examples thereof include inorganic fillers and organic fillers.

Examples of the inorganic filler include particulates of talc, alumina, silica, clay, barium sulfate, titanium oxide, kaolin, calcium oxide, glass balloon, bentonite, mica, sericite, magnesia, wollastonite, xonotlite, and whisker.

Examples of the organic filler include particulates of organic balloon and carbon nanotube.

These fillers can be used alone or in combination of two or more.

The mixing ratio of the filler is appropriately set in accordance with its purpose and usages.

The impact absorption fine particles are not particularly limited, and known impact absorption fine particles are used. To be more specific, examples thereof include particles having a core-shell structure (hereinafter, referred to as core-shell particles).

The core-shell particles, for example, consist of a core layer of a polymer with an elastomer or a rubbery polymer as a main component and a shell layer of a polymer that is graft-polymerized with respect to the core layer.

As the polymer that constitutes the core layer, preferably, a polymer having rubber elasticity is used. The glass transition temperature of the polymer that constitutes the core layer is, for example, 0°C or less, preferably -10°C or less, and usually -100°C or more.

The polymer that constitutes the core layer is, for example, obtained by polymerizing a monomer component, and preferably, obtained by polymerizing a monomer component containing at least a conjugated diene monomer and/or a (meth)acrylate monomer. The (meth)acryl means acryl or methacryl, and the (meth)acrylate means acrylate or methacrylate.

Examples of the conjugated diene monomer include butadiene, isoprene, and chloroprene. These conjugated diene monomers can be used alone or in combination of two or more. As the conjugated diene monomer, preferably, butadiene is used.

The (meth)acrylate monomer is not particularly limited, and examples thereof include methyl (meth)acrylate, ethyl (meth)acrylate, propyl (meth)acrylate, butyl (meth)acrylate, pentyl (meth)acrylate, hexyl (meth)acrylate, 2-ethylhexyl (meth)acrylate, and lauryl (meth)acrylate. These (meth)acrylate monomers can be used alone or in combination of two or more. As the (meth)acrylate monomer, in view of polymerization easiness and rubber properties, preferably, butyl acrylate and 2-ethylhexyl acrylate are used.

The used amount of the conjugated diene monomer and/or the (meth)acrylate monomer with respect to the mass of the total core layer is, in view of imparting toughness to the rigid polyurethane resin, for example, 50 mass% or more, preferably 60 mass% or more, and usually 100 mass% or less.

The polymer that constitutes the shell layer is, for example, obtained by polymerizing a monomer component, and preferably, obtained by polymerizing a monomer component containing at least one or more kinds of monomers selected from the group consisting of (meth)acrylate monomer, aromatic vinyl compound, and vinyl cyanide compound.

An example of the (meth)acylate monomer includes the above-described (meth)acrylate monomer. These (meth)acrylate monomers can be used alone or in combination of two or more.

Examples of the aromatic vinyl compound include styrene, α-methylstyrene, and monochlorostyrene. These aromatic vinyl compounds can be used alone or in combination of two or more.

Examples of the vinyl cyanide compound include acrylonitrile and methacrylonitrile. These vinyl cyanide compounds can be used alone or in combination of two or more.

The monomer component that serves as the material of the shell layer can further contain (meth)acrylates having a reactive side chain such as hydroxyalkyl (meth)acrylate (for example, 2-hydroxyethyl (meth)acrylate or the like) and epoxy alkyl (meth)acrylate (for example, glycidyl (meth)acrylate or the like) and monomers such as epoxyalkylvinyl ether (for example, glycidylvinyl ether or the like), (meth)acrylamide (including N-substitute), α,β-unsaturated acid (for example, (meth)acrylic acid or the like), α,β-unsaturated anhydride (for example, maleic anhydride or the like), and maleimide derivative (for example, imide maleate or the like) at an appropriate ratio.

The production method of the core-shell particles is not particularly limited, and a known method such as emulsion polymerization, suspension polymerization, and microsuspension polymerization is used. Preferably, emulsion polymerization is used.

In the core-shell particles, as the mass ratio of the core layer to the shell layer, in view of impact absorption and anti-aggregation properties, the mass ratio of the core layer with respect to 100 parts by mass of the total amount thereof is, for example, 50 parts by mass or more, preferably 60 parts by mass or more, and for example, 95 parts by mass or less, preferably 90 parts by mass or less. The mass ratio of the shell layer is, for example, 5 parts by mass or more, preferably 10 parts by mass or more, and for example, 50 parts by mass or less, preferably 40 parts by mass or less.

The particle size of the core-shell particles is not particularly limited, and may be, for example, a size as long as the core-shell particles can be stabilized in a state of aqueous latex. To be specific, in view of impact absorption, anti-aggregation properties, and furthermore, suppression of the flow resistance, the volume average particle size thereof is, for example, 10 nm or more, preferably 30 nm or more, more preferably 50 nm or more, and for example, 1000 µm or less, preferably 500 µm or less, more preferably 300 µm or less.

These core-shell particles can be used alone or in combination of two or more.

The mixing ratio of the core-shell particles with respect to 100 parts by mass of the total amount of the polyisocyanate component and the polyol component is, for example, 0.1 parts by mass or more, preferably 1 part by mass or more, and for example, 5 parts by mass or less, preferably 3 parts by mass or less.

The hydrolysis inhibitor is not particularly limited, and a known hydrolysis inhibitor is used. To be specific, examples thereof include a carbodiimide compound (2,6,2',6'-tetraisopropyldiphenylcarbodiimide or the like), an oxazoline compound, 4-t-butylcatechol, azodicarbonamide, and aliphatic acid amide.

These hydrolysis inhibitors can be used alone or in combination of two or more.

The mixing ratio of the hydrolysis inhibitor is appropriately set in accordance with its purpose and usages.

The dehydrating agent is, for example, blended for blowing suppression. The dehydrating agent is not particularly limited, and a known dehydrating agent is used. To be specific, examples thereof include crystalline alumino silicate (synthetic zeolite absorbent or the like), aluminum oxide (hydraulic alumina), calcium sulfate anhydrite, and hemihydrate gypsum.

These dehydrating agents can be used alone or in combination of two or more. As the dehydrating agent, preferably, crystalline alumino silicate is used, more preferably, synthetic zeolite absorbent is used.

The blowing can be, for example, also suppressed by reducing the pressure or heating at the time of the production of the polyol component to reduce the amount of moisture of the polyol component without using the dehydrating agent.

The mixing ratio of the dehydrating agent is appropriately set in accordance with its purpose and usages.

The flame retardant is not particularly limited, and a known flame retardant can be used. To be specific, examples thereof include halogenated diphenyl ethers such as decabromodiphenyl ether and octabromodiphenyl ether; halogenated compounds such as halogenated polycarbonate; inorganic compounds such as antimony trioxide, antimony tetroxide, antimony pentoxide, sodium pyroantimonate, and aluminum hydroxide; and phosphate compounds such as trimethyl phosphate, triethyl phosphate, tributyl phosphate, dibutyl phosphate, monobutyl phosphate, tris(2-ethylhexyl) phosphate, di(2-ethylhexyl) phosphate, mono(2-ethylhexyl) phosphate, triphenyl phosphate, trischloroisopropyl phosphate, trisisodecyl phosphate, diisodecyl phosphate, and monoisodecyl phosphate.

These flame retardants can be used alone or in combination of two or more.

The mixing ratio of the flame retardant is appropriately set in accordance with its purpose and usages.

The acidic compound is not particularly limited, and a known acidic compound can be used. Examples of the acidic compound include inorganic acids such as hydrochloric acid, phosphoric acid, sulfuric acid, nitric acid, boric acid, hydrobromic acid, hydroiodic acid, hydrofluoric acid, chloric acid, bromic acid, iodic acid, thiocyanic acid, tetrafluoroboric acid, and hexafluorophosphoric acid; carboxylic acids such as formic acid, acetic acid, butyric acid, isobutyric acid, valeric acid, isovaleric acid, pivalic acid, 2-ethylhexanoic acid, 2-hexyldecanoic acid, cyclohexane carboxylic acid, oxalic acid, malonic acid, succinic acid, fumaric acid, maleic acid, adipic acid, sorbic acid, benzoic acid, phthalic acid, isophthalic acid, terephthalic acid, acetylsalicylic acid, toluic acid, anisic acid, naphthalene-1-carboxylic acid, naphthalene-2-carboxylic acid, pyromellitic acid, and trimellitic acid; halogenated carboxylic acids such as chloroacetic acid, dichloroacetic acid, trichloroacetic acid, and trifluoroacetic acid; hydroxy carboxylic acids such as glycolic acid, lactic acid, malic acid, tartaric acid, citric acid, 2-hydroxybutyric acid, 3-hydroxybutyric acid, 4-hydroxybutyric acid, tartronic acid, glyceric acid, ascorbic acid, gluconic acid, salicylic acid, 4-hydroxymethyl benzoic acid, mandelic acid, and benzilic acid; aminocarboxylic acids such as glycine, alanine, asparagine, aspartic acid, glutamine, glutamic acid, β-alanine, 2-hydroxyethyl-iminodiacetic acid, 2-aminobutyric acid, 3-aminobutyric acid, 4-aminobutyric acid, 2-aminobenzoic acid, 3-aminobenzoic acid, and 4-aminobenzoic acid; heterocycle-containing carboxylic acids such as picolinic acid (pyridine-2-carboxylic acid), nicotinic acid (pyridine-3-carboxylic acid), isonicotinic acid (pyridine-4-carboxylic acid), isoquinoline-3-carboxylic acid, quinoline-2-carboxylic acid, 2,6-pyridine dicarboxylic acid, furoic acid, thenoic acid, and pyrrole carboxylic acid; oxocarboxylic acids such as acetoacetic acid, pyruvic acid, and glyoxylic acid; acid phosphates such as dimethyl phosphate, monomethyl phosphate, diethyl phosphate, monoethyl phosphate, dibutyl phosphate, monobutyl phosphate, di(2-ethylhexyl) phosphate, mono(2-ethylhexyl) phosphate, diisodecyl phosphate, monoisodecyl phosphate, diphenyl phosphate, monophenyl phosphate, dibenzyl phosphate, and monobenzyl phosphate; phosphonic acids such as methylphosphonic acid, ethylphosphonic acid, butylphosphonic acid, methylenediphosphonic acid, ethylenediphosphonic acid, 1,3-propylene diphosphonic acid, 1,4-butane diphosphonic acid, 2-ethylhexyl phosphonic acid, 2-ethylhexylphenyl phosphonic acid, 1,4-phenylene diphosphonic acid, (aminomethyl) phosphonic acid, (1-aminoethyl) phosphonic acid, nitrilotris(methylene phosphonic acid), N,N,N',N'-ethylenediaminetetraxy(methylene phosphonic acid), glycine-N,N'-bis(methylene phosphonic acid), 1-hydroxyethane-1,1-diphosphonic acid, and alendronic acid; phosphinic acids such as phenyl phosphinic acid and diphenyl phosphinic acid; phosphate polymers such as polyphosphoric acid, pyrophosphoric acid, and metaphosphoric acid; sulfonic acids such as methanesulfonic acid, trifluoromethane sulfonic acid, benzenesulfonic acid, paratoluenesulfonic acid, dodecylbenzene sulfonic acid, 1- or 2-anilinesulfonic acid, and catechol-3,5-disulfonic acid; carboxylic acid chlorides such as benzoyl chloride, acetyl chloride, and terephthaloyl dichloride; phosphate chlorides such as phosphoryl chloride and diphenylphosphoryl chloride; sulfonyl chlorides such as benzenesulfonyl chloride and methanesulfonyl chloride; and organic acids such as isocyanuric acid, barbituric acid, and Meldrum's acid.

These acidic compounds can be used alone or in combination of two or more.

The mixing ratio of the acidic compound is appropriately set in accordance with its purpose and usages.

The additive is not limited to the description above, and another known additive can be also blended at an appropriate ratio as long as it does not damage the excellent effect of the present invention. Examples thereof include anti-blowing agents, pigments, dyes, lubricants, plasticizers, and antiblocking agents.

The above-described additive can be, for example, added to at least any one of the polyisocyanate component and the polyol component, simultaneously added at the mixing of them, or added to the mixture of the polyisocyanate component and the polyol component.

In the rigid polyurethane resin composition, the mixing method of the polyisocyanate component and the polyol component (furthermore, the additive as needed) and the content ratio of each of the above-described components are, though the details are described later, appropriately set in accordance with the reaction method and the conditions of each of the components.

In the rigid polyurethane resin composition, the polyisocyanate component contains the alicyclic polyisocyanate that secures the appropriate pot life, so that the fluidity of the rigid polyurethane resin composition at the inside of the mold is excellent, and the rigid polyurethane resin (cured product) and the molded article can be obtained with excellent workability. Also, the polyisocyanate component contains the polyphenylmethane polyisocyanate that secures the mechanical strength, so that the rigid polyurethane resin (cured product) and the molded article having excellent mechanical properties and heat resistance can be obtained.

In the polyisocyanate component, the content ratio of the polyphenylmethane polyisocyanate and the alicyclic polyisocyanate is within a predetermined range, so that compared to a case where the polyphenylmethane polyisocyanate or the alicyclic polyisocyanate is used alone, particularly excellent mechanical strength can be obtained, and furthermore, the compatibility of the polyisocyanate component with the polyol component is excellent.

That is, in the rigid polyurethane resin composition, the polyisocyanate component contains the polyphenylmethane polyisocyanate and the alicyclic polyisocyanate at a predetermined ratio, so that the rigid polyurethane resin composition that has an appropriate pot life and excellent compatibility of the polyisocyanate component with the polyol component, and is capable of obtaining the rigid polyurethane resin and the molded article having excellent mechanical properties and heat resistance can be obtained.

Furthermore, the polyphenylmethane polyisocyanate secures the heat resistance, so that when the polyisocyanate component contains the polyphenylmethane polyisocyanate and the alicyclic polyisocyanate at a predetermined ratio, the rigid polyurethane resin and the molded article having excellent heat resistance can be obtained.

The rigid polyurethane resin (cured product) and the molded article made of the rigid polyurethane resin (cured product) can be, for example, obtained by allowing the above-described rigid polyurethane resin composition to react (urethane-formation react) by a known method such as bulk polymerization and solution polymerization, and by being molded by a known method to cure.

In the bulk polymerization, for example, under a nitrogen flow, the polyisocyanate component is stirred, and the polyol component is added thereto to react at a reaction temperature of 50 to 250°C, further more preferably 50 to 200°C for about 0.5 to 15 hours.

In the solution polymerization, the polyisocyanate component and the polyol component are added to an organic solvent to react at a reaction temperature of 50 to 120°C, preferably 50 to 100°C for about 0.5 to 15 hours.

Examples of the organic solvent include ketones such as acetone, methyl ethyl ketone, methyl isobutyl ketone, and cyclohexanone; nitriles such as acetonitrile; alkyl esters such as methyl acetate, ethyl acetate, butyl acetate, and isobutyl acetate; aliphatic hydrocarbons such as n-hexane, n-heptane, and octane; alicyclic hydrocarbons such as cyclohexane and methyl cyclohexane; aromatic hydrocarbons such as toluene, xylene, and ethyl benzene; glycol ether esters such as methyl cellosolve acetate, ethyl cellosolve acetate, methyl carbitol acetate, ethyl carbitol acetate, ethylene glycol ethyl ether acetate, propylene glycol methyl ether acetate, 3-methyl-3-methoxybutylacetate, and ethyl-3-ethoxypropionate; ethers such as diethyl ether, tetrahydrofuran, and dioxane; halogenated aliphatic hydrocarbons such as methyl chloride, methylene chloride, chloroform, carbon tetrachloride, methyl bromide, methylene iodide, and dichloroethane; and aprotic polar solvents such as N-methyl pyrrolidone, dimethyl formamide, N,N'-dimethylacetamide, dimethyl sulfoxide, and hexamethylphosphonylamide.

Furthermore, in the above-described polymerization reaction, for example, a known urethane-formation catalyst may be added as needed, and a free (unreacted) polyisocyanate component may be removed by a known removing method such as distillation and extraction.

Examples of the urethane-formation catalyst include amines and organic metal compounds.

Examples of the amines include tertiary amines such as triethylamine, triethylenediamine, bis-(2-dimethylaminoethyl) ether, and N-methylmorpholine; quaternary ammonium salts such as tetraethylhydroxylammonium, N,N,N-trimethyl-N-hydroxypropylammonium, 2-ethylhexanoic acid salt, 2-hydroxyethyl-trimethylammoniumoctylic acid salt, and 2,4,6-tris(dimethylaminomethyl) phenol; and imidazoles such as imidazole and 2-ethyl-4-methylimidazole.

Examples of the organic metal compound include organic tin compounds such as tin acetate, tin octylate, tin oleate, tin laurate, dibutyltin diacetate, dimethyltin dilaurate, dibutyltin dilaurate, dibutyltin dimercaptide, dibutyltin maleate, dibutyltin dilaurate, dibutyltin dineodecanoate, dioctyltin dimercaptide, dioctyltin dilaurate, and dibutyltin dichloride; organic lead compounds such as lead octanoate and lead naphthenate; organic nickel compounds such as nickel naphthenate; organic cobalt compounds such as cobalt naphthenate; organic copper compounds such as copper octenoate; organic bismuth compounds such as bismuth octylate and bismuth neodecanoate; organic zirconium compounds such as zirconium acetylacetone chelate; organic titanium compounds such as titanium acetoacetic acid chelate and bis(2-ethylhexanoic acid) titanium; and organic iron compounds such as iron acetylacetone chelate.

Furthermore, examples of the urethane-formation catalyst include potassium salts such as potassium carbonate, potassium acetate, and potassium octylate (for example, DABCO K-15 manufactured by Air Products Japan K.K. and Potassium Hexoate 13% manufactured by TOEI CHEMICAL INDUSTRY CO., LTD.).

These urethane-formation catalysts can be used alone or in combination of two or more.

The mixing ratio of the urethane-formation catalyst is appropriately set in accordance with its purpose and usages, and is, for example, 0.01 parts by mass or more, preferably 0.1 parts by mass or more, and for example, 1 part by mass or less, preferably 0.5 parts by mass or less with respect to 100 parts by mass of the total amount of the polyisocyanate component and the polyol component.

The urethane-formation catalyst can be, for example, added to at least any one of the polyisocyanate component and the polyol component, simultaneously added at the mixing of them, or added to the mixture of the polyisocyanate component and the polyol component.

In the bulk polymerization and the solution polymerization, for example, the polyisocyanate component and the polyol component are blended so that the equivalent ratio (NCO/OH) of the isocyanate group in the polyisocyanate component with respect to the hydroxyl group in the polyol component is, for example, 0.75 to 4, preferably 1.0 to 3.

When the above-described polymerization reaction is performed more industrially, for example, a known method such as one shot method and pre-polymer method is used.

In the one shot method, for example, the polyisocyanate component and the polyol component are formulated (mixed) so that the isocyanate index, that is, the ratio ((NCO/OH) × 100) of the isocyanate group in the polyisocyanate component with respect to the hydroxyl group in the polyol component is, for example, 75 or more, preferably 90 or more, more preferably 100 or more, and for example, 400 or less, preferably 300 or less, more preferably 250 or less to be then subjected to curing reaction at, for example, room temperature to 250°C, preferably room temperature to 200°C for, for example, 5 minutes to 72 hours, preferably 4 to 24 hours. The curing temperature may be fixed, or can be gradually increased or cooled. In the reaction, the above-described urethane-formation catalyst may be added as needed.

In the curing reaction, the polyisocyanate component and/or the polyol component are/is preferably heated to lower the viscosity thereof to be then mixed; thereafter, the air therein is released as needed; and then, the obtained mixture is injected to a mold that is preheated.

After the mixture is injected into the mold to react and then, is removed from the mold, the rigid polyurethane resin and the molded article that are molded into a desired shape can be obtained. After the demolding, the resulting product can be also aged at the room temperature within about seven days as needed.

In the prepolymer method, for example, first, the polyisocyanate component reacts with a part (preferably, high molecular weight polyol) of the polyol component, thereby synthesizing an isocyanate group-terminated prepolymer having an isocyanate group at the end of the molecule. Next, the obtained isocyanate group-terminated prepolymer reacts with a remaining portion (preferably, low molecular weight polyol) of the polyol component to be subjected to a chain extension reaction. In the prepolymer method, the remaining portion of the polyol component is used as a chain extension agent.

To synthesize the isocyanate group-terminated prepolymer, the polyisocyanate component and a part of the polyol component are formulated (mixed) so that the isocyanate index, that is, the ratio ((NCO/OH) × 100) of the isocyanate group in the polyisocyanate component with respect to the hydroxyl group in a part of the polyol component is, for example, 110 to 2000, preferably 130 to 1000, further more preferably 130 to 600 to then react in a reaction vessel at, for example, room temperature to 150°C, preferably 50 to 120°C, for, for example, 0.5 to 18 hours, preferably 2 to 10 hours. In the reaction, the above-described urethane-formation catalyst may be added as needed, or after the completion of the reaction, the unreacted polyisocyanate component can be removed by, for example, a known removing method such as distillation and extraction as needed.

Next, to react the obtained isocyanate group-terminated prepolymer with the remaining portion of the polyol component, the isocyanate group-terminated prepolymer and the remaining portion of the polyol component are formulated (mixed) so that the isocyanate index, that is, the ratio ((NCO/OH) × 100) of the isocyanate group in the polyisocyanate component with respect to the hydroxyl group in the remaining portion of the polyol component is, for example, 75 to 400, preferably 100 to 300 to be then subjected to curing reaction at, for example, room temperature to 250°C, preferably room temperature to 200°C for, for example, 5 minutes to 72 hours, preferably 1 to 24 hours.

In the curing reaction, the isocyanate group-terminated prepolymer and/or the remaining portion of the polyol component are/is preferably heated to lower the viscosity thereof to be then mixed; thereafter, the air therein is released as needed; and then, the obtained mixture is injected to a mold that is preheated.

After the mixture is injected into the mold to react and then, is removed from the mold, the rigid polyurethane resin and the molded article that are molded into a desired shape can be obtained. After the demolding, the resulting product can be also aged at the room temperature within about seven days as needed.

The production method of the rigid polyurethane resin and the molded article is not particularly limited, and a known production method is used. To be specific, examples thereof include a cast molding method and a RIM (reaction injection molding) method.

Preferably, the RIM method is used. In the RIM method, the rigid polyurethane resin composition obtained by mixing the polyisocyanate component and the polyol component is injected into a mold to cure under the above-described conditions.

The rigid polyurethane resin and the molded article are obtained by using the above-described rigid polyurethane resin composition, so that the mechanical properties and the heat resistance are excellent.

To be specific, the polyphenylmethane polyisocyanate and the alicyclic polyisocyanate are used at a predetermined ratio, so that the rigid polyurethane resin and the molded article described above tend to have mechanical properties such as unpredictably high bending elastic modulus.

The rigid polyurethane resin composition of the present invention containing the polyisocyanate component and the polyol component described above tends to have an unpredictably long pot life. Although the reason for showing such properties is not clear, it is considered to be one of the reasons that the polyisocyanate component contains the alicyclic polyisocyanate at an appropriate ratio, and thus, the compatibility of the polyphenylmethane polyisocyanate with the polyol component is improved.

Thus, the rigid polyurethane resin and the molded article described above are, for example, preferably used as a fiber reinforced plastic (FRP) and in addition, a plastic for structural material and a plastic for structural core material.

Among all, the above-described rigid polyurethane resin is preferably used in the fiber reinforced plastic (FRP).

The fiber reinforced plastic is a plastic that is reinforced by putting a fiber into the rigid polyurethane, and made of the fiber and the rigid polyurethane resin. To be specific, the fiber reinforced plastic is made of the fiber and the above-described rigid polyurethane resin composition that is impregnated with the fiber to cure.

That is, the fiber reinforced plastic is obtained by impregnating the above-described rigid polyurethane resin composition with the fiber to cure.

Examples of the fiber include carbon fibers, glass fibers, aramid fibers, boron fibers, metal fibers, cellulose nanofibers, and artificial spider silk. These fibers can be used alone or in combination of two or more.

As the fiber, preferably carbon fibers, glass fibers, and aramid fibers are used. In other words, the fiber preferably consists of at least one or more kinds selected from the group consisting of carbon fibers, glass fibers, and aramid fibers.

As the fiber, particularly preferably, carbon fibers are used.

The carbon fiber is not particularly limited, and examples thereof include pitch-type carbon fibers, PAN (polyacrylonitrile)-type carbon fibers, and rayon-type carbon fibers. These carbon fibers can be used alone or in combination of two or more.

As the carbon fibers, preferably, PAN (polyacrylonitrile)-type carbon fibers are used.

When the carbon fiber is selected as the fiber, the fiber reinforced plastic is referred to as a carbon fiber reinforced plastic (CFRP).

The embodiment of the fiber bundle is not particularly limited, and examples thereof include a large tow and a regular tow.

The embodiment of the fiber is not particularly limited, and examples thereof include a strip-form, a woven fabric-form (plain woven fabric, uniaxial woven fabric, multiaxial woven fabric, non-crimp woven fabric, or the like), and a non-woven fabric-form. Preferably, a woven fabric-form is used. The fiber in the woven fabric-form can be also used by laminating a plurality (for example, 2 to 20 pieces) of fibers.

The fiber reinforced plastic can be, for example, obtained by impregnating the above-described rigid polyurethane resin composition with the above-described fiber to cure.

To be specific, in the production of the fiber reinforced plastic, for example, a known method is used. Examples thereof include a RTM (resin transfer molding) method, a HP-RTM (high-pressure resin transfer molding) method, the above-described RIM method, and in addition, a prepreg method, a hand lay-up method, a filament winding method, and a pultrusion method.

Preferably, a RTM method, a HP-RTM method, and/or a RIM method are used. In other words, the fiber reinforced plastic is preferably obtained by the RTM method, the HP-RTM method, and/or the RIM method.

In the RTM method and the RIM method, the fiber that is cut and formed in advance in accordance with the internal size of the mold is disposed at the inside of the mold and thereafter, the rigid polyurethane resin composition that is obtained by mixing the polyisocyanate component and the polyol component is injected into the mold to be impregnated with the fiber to then cure under the above-described conditions.

In the HP-RTM method, in the above-described RTM method, the pressure at the inside of the RTM mold is reduced and the pressurized rigid polyurethane resin composition is injected into the mold at a high speed to be impregnated with the fiber to then cure under the above-described conditions.

In the method, the fiber is formed in advance, and the step of impregnating the rigid polyurethane resin composition with the fiber and the step of curing the rigid polyurethane resin composition at the inside of the mold are simultaneously performed, so that the fiber reinforced plastic having a relatively complicated shape can be obtained with excellent productivity.

In the fiber reinforced plastic, the fiber content in terms of volume is, for example, 20% by volume or more, preferably 30% by volume or more, and for example, 80% by volume or less, preferably 70% by volume or less.

The fiber reinforced plastic is obtained by impregnating the above-described rigid polyurethane resin composition with the fiber, so that it has excellent mechanical properties and heat resistance.

Thus, the fiber reinforced plastic is preferably used as, for example, structural members, interior materials, exterior materials, wheels, and spokes for vehicles (automobiles, aircrafts, motorcycles, bicycles).

In addition to the description above, for example, the fiber reinforced plastic is preferably used as outer shell materials for helmet, robot members, ship members, yacht members, rocket members, office chairs, health care members (nursing care leg, nursing care chair, bed, eyewear frame, or the like), structural materials of wearable member, sports goods (shaft of golf club, tennis racket frame, ski board, snowboard, or the like), amusement members (roller coaster or the like), construction materials for building and housing, rolls for paper industry, casings for electronic component (smartphone, tablet, or the like), structures of power generator (thermal power generation, hydraulic power generation, wind power generation, nuclear power generation), and structures of tank lorry or the like. Examples

Next, the present invention is described based on Production Examples, Examples, and Comparative Examples. The present invention is however not limited by the following Examples. All designations of "part" or "parts" and "%" mean part or parts by mass and % by mass, respectively, unless otherwise particularly specified in the following description. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

In the following, the measurement methods of various properties used in Examples and Comparative Examples are shown.

### <Content Ratio of Isocyanate Group (mass%)>

The content ratio of the isocyanate group was measured by using a potentriometric titrator by a n-dibutylamine method in conformity with JIS K-1603 (2007).

### <Mole Ratio of Isocyanate Group Derived from Alicyclic Polyisocyanate>

The mole ratio of the isocyanate group derived from the alicyclic polyisocyanate with respect to the total isocyanate group in the polyisocyanate component was calculated from the ratio of the mixing ratio and the content ratio of the isocyanate group of the alicyclic polyisocyanate to the mixing ratio and the content ratio of the isocyanate group of the polymethylene polyphenyl polyisocyanate.

### <Mole Ratio of Isocyanate Group of Diphenylmethane Diisocyanate in Total Isocyanate Group of Polymethylene Polyphenyl Polyisocyanate>

The ratio of the peak area having the peak top between the polyethylene oxide-based molecular weight of 100 to 330 with respect to the total peak area was defined as the mass content ratio of the diphenylmethane diisocyanate in the polymethylene polyphenyl polyisocyanate based on the chromatogram obtained under the following GPC measurement conditions.

The mole ratio calculated from the content ratio of the isocyanate group of the polymethylene polyphenylene polyisocyanate and the content ratio of the isocyanate group of the diphenylmethane diisocyanate was defined as the mole ratio (mol%) of the isocyanate group of the diphenylmethane diisocyanate in the total isocyanate group of the polymethylene polyphenyl polyisocyanate.

When the carbodiimide derivative (described later) of the polymethylene polyisocyanate and the polymethylene polyisocyanate (non-modified) were used in combination, the isocyanate group of the carbodiimide derivative of the polymethylene polyisocyanate was included in the isocyanate group of the polymethylene polyphenylene polyisocyanate (non-modified).

The isocyanate group of the diphenylmethane diisocyanate in the carbodiimide derivative of the polymethylene polyisocyanate was included in the isocyanate group of the diphenylmethane diisocyanate in the polymethylene polyphenylene polyisocyanate (non-modified).

Device: HLC-8020 (manufactured by TOSOH CORPORATION)
Column: G1000HXL, G2000HXL, and G3000HXL (hereinabove, manufactured by TOSOH CORPORATION, trade name) connected in series
Sample concentration: 1.0 mass%
Sample injection amount: 100 µL
Column temperature: 40°C
Eluent: tetrahydrofuran
Flow rate: 0.8 mL/min
Detection device: differential refractive index detector
Standard sample: polyethylene oxide (manufactured by TOSOH CORPORATION, trade name: TSK standard polyethylene oxide)

### <<Preparation of Material>>

### Preparation Example 1 (Isocyanate 1)

COSMONATE M-200 (manufactured by Mitsui Chemicals, Inc., polymethylene polyphenyl isocyanate having the content ratio of the isocyanate group of 31.6 mass%, mole ratio of the isocyanate group of the diphenylmethane diisocyanate in the total isocyanate group of the polymethylene polyphenyl polyisocyanate = 42.8 mol%) was defined as Isocyanate 1.

### Preparation Example 2 (Isocyanate 2)

COSMONATE M-50 (manufactured by Mitsui Chemicals, Inc., polymethylene polyphenyl isocyanate having the content ratio of the isocyanate group of 31.9 mass%, mole ratio of the isocyanate group of the diphenylmethane diisocyanate in the total isocyanate group of the polymethylene polyphenyl polyisocyanate = 52.5 mol%) was defined as Isocyanate 2.

### Preparation Example 3 (Isocyanate 3)

COSMONATE M-400 (manufactured by Mitsui Chemicals, Inc., polymethylene polyphenyl isocyanate having the content ratio of the isocyanate group of 31.2 mass%, mole ratio of the isocyanate group of the diphenylmethane diisocyanate in the total isocyanate group of the polymethylene polyphenyl polyisocyanate = 34.7 mol%) was defined as Isocyanate 3.

### Preparation Example 4 (Isocyanate 4)

COSMONATE MC-400 (manufactured by Mitsui Chemicals, Inc., polymethylene polyphenyl isocyanate having the content ratio of the isocyanate group of 32.3 mass%, mole ratio of the isocyanate group of the diphenylmethane diisocyanate in the total isocyanate group of the polymethylene polyphenyl polyisocyanate = 63.6 mol%) was defined as Isocyanate 4.

### Preparation Example 5 (Isocyanate 5)

COSMONATE M-1500 (manufactured by Mitsui Chemicals, Inc., polymethylene polyphenyl isocyanate having the content ratio of the isocyanate group of 30.7 mass%, mole ratio of the isocyanate group of the diphenylmethane diisocyanate in the total isocyanate group of the polymethylene polyphenyl polyisocyanate = 25.9 mol%) was defined as Isocyanate 5.

### Preparation Example 6 (Isocyanate 6)

A mixture of 2,5-di(isocyanatomethyl) bicyclo[2.2.1] heptane and 2,6-di(isocyanatomethyl) bicyclo[2.2.1] heptane was produced in conformity with the method described in Example 3 of the International Publication WO 2012/153509. This was defined as Isocyanate 6.

### Preparation Example 7 (Isocyanate 7)

TAKENATE 600 (manufactured by Mitsui Chemicals, Inc., 1,3-diisocyanatomethyl cyclohexane having the content ratio of the isocyanate group of 43.2 mass%) was defined as Isocyanate 7.

### Preparation Example 8 (Isocyanate 8)

1,4-bis(isocyanatomethyl) cyclohexane obtained by the method described in Production Example 3 of the International Publication WO 2009/051114 was defined as Isocyanate 8.

The content ratio of the isocyanate group of Isocyanate 8 was 43.2 mass%, and the trans/cis ratio based on ¹³C-NMR measurement was 86/14.

### Preparation Example 9 (Isocyanate 9)

VESTANAT IPDI (manufactured by Evonik Japan Co., Ltd., isophorone diisocyanate having the content ratio of the isocyanate group of 37.8 mass%) was defined as Isocyanate 9.

### Preparation Example 10 (Isocyanate 10)

COSMONATE LK (manufactured by Mitsui Chemicals, Inc., carbodiimide derivative of the polymethylene polyisocyanate having the content ratio of the isocyanate group of 28.2 mass%, carbodiimide derivative content of 30 mass%, mole ratio of the isocyanate group of the diphenylmethane diisocyanate in the total isocyanate group of the carbodiimide derivative of the polymethylene polyisocyanate = 83.5 mol%) was defined as Isocyanate 10.

### Preparation Example 11 (Polyol 1)

ACTCOL T-300 (polyoxypropylene polyol, number average molecular weight of 300, manufactured by Mitsui Chemicals, Inc., hydroxyl value of 550 mgKOH/g, average functionality = 3, viscosity at 25°C = 660 mPa·s) was defined as Polyol 1.

### Preparation Example 12 (Polyol 2)

ACTCOL T-400 (polyoxypropylene polyol, number average molecular weight of 400, manufactured by Mitsui Chemicals, Inc., hydroxyl value of 415 mgKOH/g, average functionality = 3, viscosity at 25°C = 410 mPa·s) was defined as Polyol 2.

### Preparation Example 13 (Polyol 3)

ACTCOL GR-16A (polyoxypropylene polyol, number average molecular weight of 400, manufactured by Mitsui Chemicals, Inc., hydroxyl value of 555 mgKOH/g, average functionality = 4, viscosity at 25°C = 3500 mPa·s) was defined as Polyol 3.

### Preparation Example 14 (Polyol 4)

ACTCOL T-880 (polyoxypropylene polyol, number average molecular weight of 200, manufactured by Mitsui Chemicals, Inc., hydroxyl value of 875 mgKOH/g, average functionality = 3, viscosity at 25°C = 5000 mPa·s) was defined as Polyol 4.

### Preparation Example 15 (Polyol 5)

ACTCOL DIOL-280 (polyoxypropylene polyol, number average molecular weight of 280, manufactured by Mitsui Chemicals, Inc., hydroxyl value of 400 mgKOH/g, average functionality = 2, viscosity at 25°C = 63 mPa·s) was defined as Polyol 5.

### Preparation Example 16 (Impact Absorption Fine Particles)

An aqueous latex of impact absorption fine particles was obtained from the following monomer component by the method described in Production Example 1 of the International Publication WO 2004/108825.

### Core layer: styrene/butadiene = 75/25 (mass ratio)

Shell layer: azobisisobutyronitrile (AIBN)/styrene/methyl methacrylate/acrylonitrile/glycidyl methacrylate = 1.2/54/72/36/18 (mass ratio)

The concentration of the impact absorption fine particles in the aqueous latex was 40.5 mass.

### <<Production of Rigid Polyurethane Resin and Fiber Reinforced Plastic>>

### Examples 1 to 28 and Comparative Examples 1 to 3

A rigid polyurethane resin composition was prepared by the following method.

That is, of the components (materials) shown in Tables 1 to 5, each of the components other than the polyisocyanate component was weighed and mixed in accordance with the mixing formulations of Tables 1 to 5, and then, stirred and mixed to be uniform, thereby preparing a polyol component (premix). The temperature of the polyol component was adjusted to 60°C.

When the impact absorption fine particles were used, the aqueous latex of the impact absorption fine particles was mixed with the polyol component so as to have the concentration of the fine particles described in Tables 1 to 5 to be then subjected to reduced pressure dehydration at 100°C for two hours, thereby preparing a polyol component (premix) containing the impact absorption fine particles.

The isocyanate that was separately prepared was weighed in accordance with the mixing formulations of Tables 1 to 5, thereby producing a polyisocyanate component. The temperature of the polyisocyanate component was adjusted to 60°C.

Thereafter, the polyisocyanate component was added to the polyol component (premix), and the resulting mixture was stirred for five seconds with a high-speed stirrer (number of revolutions of 5000 rpm), while the air thereof was removed by vacuum reduced pressure, thereby preparing a rigid polyurethane resin composition.

The obtained rigid polyurethane resin composition was quickly injected into a one-side opening mold (thickness of 2 mm, depth of 100 mm, width of 300 mm) that was heated at 100°C in advance and cured at 100°C for one minute, so that a rigid polyurethane resin (cured product, thickness of 2 mm, length of 100 mm, width of 300 mm) was obtained as a polyurethane elastomer.

In Examples 16 and 18, a carbon fiber woven fabric (manufactured by TORAY INDUSTRIES, INC., TORAYCA CO6343, plain woven fabrics, mass per unit area of 198 g/m², lamination of nine pieces) was set in the one-side opening mold, thereby producing a fiber reinforced plastic.

In Example 28, two layers of carbon fiber woven fabrics (manufactured by FORMOSA TAFFETA CO., LTD., ECMF 25, non-crimped fabric, mass per unit area of 200 g/m², layer: 0/45/90/-45°, lamination of four pieces) were set in the one-side opening mold, thereby producing a fiber reinforced plastic.

### <<Evaluation>>

### <Bending Elastic Modulus (MPa)>

The bending elastic modulus was measured in accordance with JIS K6911 (1995) under the following conditions.

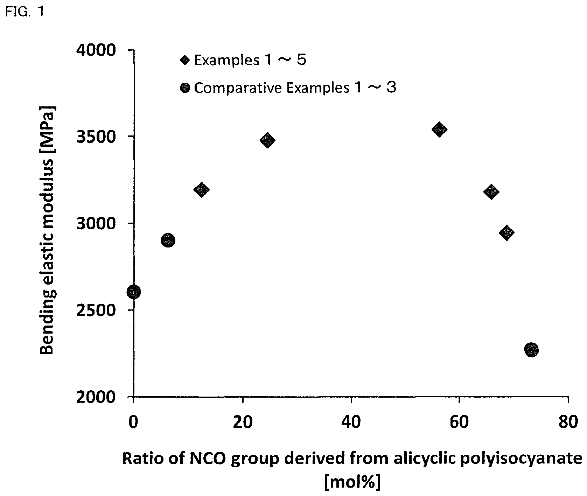

Measurement conditions
Test piece: 10 mm (width) × 2 mm (thickness) × 100 mm (length)
Bending rate: 5 mm/min
Distance between supports: 50 mm
Based on the results of Examples 1 to 5 and Comparative Examples 1 to 3, the relationship of the ratio of the isocyanate group derived from the alicyclic polyisocyanate in the polyisocyanate component with the bending elastic modulus of the rigid polyurethane resin was shown in FIG. 1.

### <Compatibility>

At the time of the preparation of the rigid polyurethane resin composition, the appearance of the mixture after stirring the polyol component (premix) and the polyisocyanate component with a high-speed stirrer (number of revolutions of 5000 rpm) for five second, while the air thereof was removed by vacuum reduced pressure, was visually confirmed.

A case where the resulting mixture was transparent immediately after the completion of the stirring was evaluated as "Excellent". A case where the resulting mixture was opaque at the time of the completion of the stirring, and became transparent in below five seconds after the completion of the stirring was evaluated as "Good". A case where it took five seconds or more for the resulting mixture to become transparent after the completion of the stirring was evaluated as "Bad".

### <<Heat Resistance (Tg: Glass Transition Temperature (°C)>>

The glass transition temperature of the rigid polyurethane resin (including the rigid polyurethane resin in the fiber reinforced plastic) was measured using a DSC measurement device (manufactured by Seiko Instruments Inc., trade name: DSC 220C).

To be specific, about 8 mg of the pulverized rigid polyurethane resin (including the rigid polyurethane resin in the fiber reinforced plastic) was collected into an aluminum-made pan and crimped by placing a cover thereon, thereby preparing a sample. A reference was prepared in the same manner as that, except that the alumina was collected.

After the sample and the reference were set in a predetermined position at the inside of the cell of the DSC measurement device, the measurement was carried out under a nitrogen flow at a nominal flow of 40 Nml/min. The temperature thereof was increased from the room temperature to 230°C at the temperature rising rate of 10°C/min, and the glass transition temperature (unit: °C) was obtained from the obtained DSC curve.

### <Pot Life (seconds)>

The pot life of the rigid polyurethane resin composition was measured by the following method.

That is, of the components (materials) shown in Tables 1 to 5, each of the components other than the polyisocyanate component was weighed and mixed in accordance with the mixing formulations of Tables 1 to 5, and then, stirred and mixed to be uniform, thereby preparing a polyol component (premix). The temperature of the polyol component was adjusted to 60°C.

When the impact absorption fine particles were used, the aqueous latex of the impact absorption fine particles was mixed with the polyol component so as to have the concentration of the fine particles described in Tables 1 to 5 to be then subjected to reduced pressure dehydration at 100°C for two hours, thereby preparing a polyol component (premix) containing the impact absorption fine particles.

The isocyanate that was separately prepared was weighed in accordance with the mixing formulations of Tables 1 to 5, thereby producing a polyisocyanate component. The temperature of the polyisocyanate component was adjusted to 60°C.

Thereafter, the polyisocyanate component was added to the polyol component (premix), and the resulting mixture was stirred for five seconds with a high-speed stirrer (number of revolutions of 5000 rpm), while the air thereof was removed by vacuum reduced pressure, thereby preparing a rigid polyurethane resin composition.

The obtained rigid polyurethane resin composition was poured into a 100 mL PE cup, and the viscosity of the rigid polyurethane resin composition was measured with a B-type viscometer.

The start of the measurement of the pot life was defined as the moment when mixing of the polyol component (premix) and the polyisocyanate component was started.

The completion of the measurement of the pot life was defined as the time when the increasing viscosity of the reaction rigid polyurethane resin composition was started by the reaction of the polyol component and the isocyanate component, and the fluidity was started to reduce (time over 500 mPa·s with the B-type viscometer).

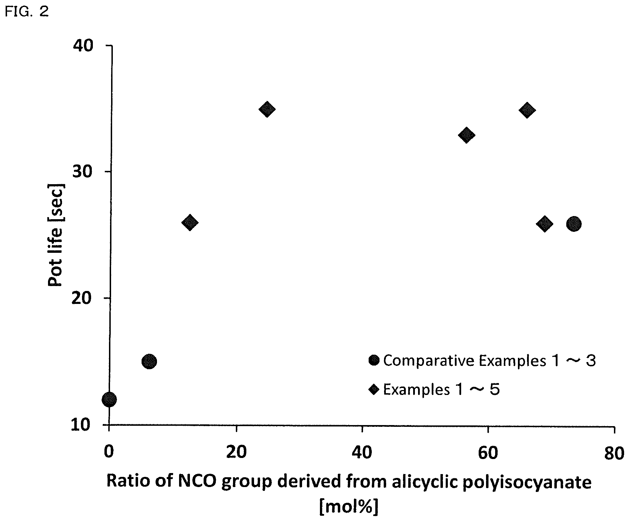

Based on the results of Examples 1 to 5 and Comparative Examples 1 to 3, the relationship of the ratio of the isocyanate group derived from the alicyclic polyisocyanate in the polyisocyanate component with the pot life of the rigid polyurethane resin composition was shown in FIG. 2.

### <Curing Time (seconds)>

The curing time (seconds) was measured at the time of the measurement of the pot life of the rigid polyurethane resin composition.

The start of the measurement of the curing time was defined as the moment when mixing of the polyol component (premix) and the polyisocyanate component was started.

The completion of the measurement of the curing time was defined as the time when the fluidity of the reaction rigid polyurethane resin composition disappeared by the reaction of the polyol component and the isocyanate component (time reaching 200000 mPa·s with the B-type viscometer).

### [Table 1]

**Table 1**

| No. | | | Comp. Ex. 1 | Comp. Ex. 2 | Ex. 1 | Ex. 2 | Ex. 3 | Ex. 4 | Ex. 5 | Comp. Ex. 3 |
|---|---|---|---|---|---|---|---|---|---|---|
| | | Isocyanate 1 (p-MDI) | 100 | 95 | 90 | 80 | 50 | 40 | 37 | 32 |
| | | Isocyanate 2 (p-MDI) | - | - | - | - | - | - | - | - |
| | | Isocyanate 3 (p-MDI) | - | - | - | - | - | - | - | - |
| | | Isocyanate 4 (p-MDI) | - | - | - | - | - | - | - | - |
| | Polyisocyanate Component | Isocyanate 5 (p-MDI) | - | - | - | - | - | - | - | - |
| | | Isocyanate 6 (NBDI) | - | 5 | 10 | 20 | 50 | 60 | 63 | 68 |
| | | Isocyanate 7 (1,3-H₆XDI) | - | - | - | - | - | - | - | - |
| | | Isocyanate 8 (1,4-H₆XDI) | - | - | - | - | - | - | - | - |
| Mixing Formulation (parts by mass) | | Isocyanate 9 (IPDI) | - | - | - | - | - | - | - | - |
| | Polyol Component | Polyol 1 (T-300) | 73.1 | 74.1 | 75.2 | 77.3 | 83.6 | 85.7 | 86.3 | 87.4 |
| | | Polyol 2 (T-400) | - | - | - | - | - | - | - | - |
| | | Polyol 3 (GR-16A) | - | - | - | - | - | - | - | - |
| | | Polyol 4 (T-880) | - | - | - | - | - | - | - | - |
| | Catalyst | DBTDL | 0.1 | 0.1 | 0.1 | 0.2 | 0.3 | 0.6 | 0.8 | 1.0 |
| | Additive | Impact Absorption Particles | - | - | - | - | - | - | - | - |
| | Fiber | Carbon Fiber (C06343) | - | - | - | - | - | - | - | - |
| Isocyanate Index ((NCO/OH) ^{x} 100) | | | 105 | 105 | 105 | 105 | 105 | 105 | 105 | 105 |
| Ratio of NCO Group Derived from Alicyclic Polyisocyanate in Total NCO Group (mol%) | | | 0 | 6.4 | 12.5 | 24.4 | 56.3 | 65.9 | 68.7 | 73.3 |
| Ratio of NCO Group Derived from MDI in Total NCO Group of p-MDI (mol%) | | | 42.8 | 42.8 | 42.8 | 42.8 | 42.8 | 42.8 | 42.8 | 42.8 |
| | | Bending Elastic Modulus [MPa] | 2606 | 2903 | 3195 | 3480 | 3540 | 3180 | 2944 | 2270 |
| Evaluation | | Compatibility | Bad | Good | Excellent | Excellent | Excellent | Excellent | Excellent | Excellent |
| | | Tg [°C] | 129 | 122 | 122 | 118 | 99 | 90 | 83 | 78 |
| | | Pot Life [seconds] | 12 | 15 | 26 | 35 | 33 | 35 | 36 | 36 |
| | | Curing Time [seconds] | 39 | 40 | 41 | 40 | 40 | 39 | 40 | 39 |

### [Table 2]

**Table 2**

| No. | | | Ex. 6 | Ex. 7 | Ex. 8 | Ex. 9 | Ex. 10 | Ex. 11 | Ex. 12 |
|---|---|---|---|---|---|---|---|---|---|
| Mixing Formulation (parts by mass) | Polyisocyanate Component | Isocyanate 1 (p-MDI) | - | - | - | - | 80 | 80 | 80 |
| | | Isocyanate 2 (p-MDI) | - | 80 | - | - | - | - | - |
| | | Isocyanate 3 (p-MDI) | - | - | 80 | - | - | - | - |
| | | Isocyanate 4 (p-MDI) | 80 | - | - | - | - | - | - |
| | | Isocyanate 5 (p-MDI) | - | - | - | 80 | - | - | - |
| | | Isocyanate 6 (NBDI) | 20 | 20 | 20 | 20 | - | - | - |
| | | Isocyanate 7 (1,3-H₆XDI) | - | - | - | - | 20 | - | - |
| | | Isocyanate 8 (1,4-H₆XDI) | - | - | - | - | - | 20 | - |
| | | Isocyanate 9 (IPDI) | - | - | - | - | - | - | 20 |
| | Polyol Component | Polyol 1 (T-300) | 78.6 | 77.9 | 76.6 | 75.7 | 78.5 | 78.5 | 76.0 |
| | | Polyol 2 (T-400) | - | - | - | - | - | - | - |
| | | Polyol 3 (GR-16A) | - | - | - | - | - | - | - |
| | | Polyol 4 (T-880) | - | - | - | - | - | - | - |
| | Catalyst | DBTDL | 0.2 | 0.2 | 0.2 | 0.2 | 0.2 | 0.2 | 0.2 |
| | Additive | Impact Absorption Particles | - | - | - | - | - | - | - |
| | Fiber | Carbon Fiber (C06343) | - | - | - | - | - | - | - |
| Isocyanate Index ((NCO/OH) ^{x} 100) | | | 105 | 105 | 105 | 105 | 105 | 105 | 105 |
| Ratio of NCO Group Derived from Alicyclic Polyisocyanate in Total NCO Group (mol%) | | | 24.0 | 24.2 | 24.6 | 24.9 | 25.5 | 25.5 | 23.0 |
| Ratio of NCO Group Derived from MDI in Total NCO Group of p-MDI (mol%) | | | 63.6 | 52.5 | 34.7 | 25.9 | 42.8 | 42.8 | 42.8 |
| Evaluation | | Bending Elastic Modulus [MPa] | 3020 | 3420 | 3063 | 2475 | 3150 | 3144 | 3427 |
| | | Compatibility | Excellent | Excellent | Good | Good | Excellent | Excellent | Good |
| | | Tg [°C] | 104 | 110 | 115 | 113 | 100 | 117 | 107 |
| | | Pot Life [seconds] | 33 | 35 | 35 | 36 | 36 | 33 | 40 |
| | | Curing Time [seconds] | 40 | 40 | 41 | 40 | 41 | 38 | 49 |

### [Table 3]

**Table 3**

| No. | | | Ex. 13 | Ex. 14 | Ex. 15 | Ex. 16 | Ex. 17 | Ex. 18 |
|---|---|---|---|---|---|---|---|---|
| Mixing Formulation (parts by mass) | Polyisocyanate Component | Isocyanate 1 (p-MDI) | 80 | 80 | 80 | 80 | 80 | 80 |
| | | Isocyanate 2 (p-MDI) | - | - | - | - | - | - |
| | | Isocyanate 3 (p-MDI) | - | - | - | - | - | - |
| | | Isocyanate 4 (p-MDI) | - | - | - | - | - | - |
| | | Isocyanate 5 (p-MDI) | - | - | - | - | - | - |
| | | Isocyanate 6 (NBDI) | 20 | 20 | - | 20 | 20 | 20 |
| | | Isocyanate 7 (1,3-H₆XDI) | - | - | - | - | - | - |
| | | Isocyanate 8 (1,4-H₆XDI) | - | - | 20 | - | - | - |
| | | Isocyanate 9 (IPDI) | - | - | - | - | - | - |
| | Polyol Component | Polyol 1 (T-300) | - | - | - | 77.3 | 77.3 | 77.3 |
| | | Polyol 2 (T-400) | 103.7 | - | - | - | - | - |
| | | Polyol 3 (GR-16A) | - | 77.3 | - | - | - | - |
| | | Polyol 4 (T-880) | - | - | 49.3 | - | - | - |
| | Catalyst | DBTDL | 0.2 | 0.2 | 0.2 | 0.2 | 0.2 | 0.2 |
| | Additive | Impact Absorption Particles | - | - | - | 2.0 | - | 2.0 |
| | Fiber | Carbon Fiber (C06343) | - | - | - | - | 177.3 | 177.3 |
| Isocyanate Index ((NCO/OH) × 100) | | | 105 | 105 | 105 | 105 | 105 | 105 |
| Ratio of NCO Group Derived from Alicyclic Polyisocyanate in Total NCO Group (mol%) | | | 24.4 | 24.4 | 25.5 | 24.4 | 24.4 | 24.4 |
| Ratio of NCO Group Derived from MDI in Total NCO Group of p-MDI (mol%) | | | 42.8 | 42.8 | 42.8 | 42.8 | 42.8 | 42.8 |
| Evaluation | | Bending Elastic Modulus [MPa] | 2622 | 3220 | 3779 | 3213 | 32300 | 31200 |
| | | Compatibility | Excellent | Excellent | Excellent | Excellent | Excellent | Excellent |
| | | Tg [°C] | 97 | 124 | 147 | 120 | 116 | 114 |
| | | Pot Life [seconds] | 34 | 35 | 36 | 35 | 35 | 36 |
| | | Curing Time [seconds] | 40 | 40 | 40 | 40 | 40 | 41 |

### [Table 4]

**Table 4**

| No. | | | Ex. 19 | Ex. 20 | Ex. 21 | Ex. 22 |
|---|---|---|---|---|---|---|
| Mixing Formulation (parts by mass) | Polyisocyanate Component | Isocyanate 1 (p-MDI) | 80 | 30 | 30 | 30 |
| | | Isocyanate 2 (p-MDI) | - | - | - | - |
| | | Isocyanate 3 (p-MDI) | - | - | - | - |
| | | Isocyanate 4 (p-MDI) | - | - | - | - |
| | | Isocyanate 5 (p-MDI) | - | - | - | - |
| | | Isocyanate 6 (NBDI) | - | - | - | - |
| | | Isocyanate 7 (1,3-H₆XDI) | - | - | - | - |
| | | Isocyanate 8 (1,4-H₆XDI) | 20 | 20 | 20 | 20 |
| | | Isocyanate 9 (IPDI) | - | - | - | - |
| | | Isocyanate 10 (modified p-MDI) | - | 50 | 50 | 50 |
| | Polyol Component | Polyol 1 (T-300) | - | - | - | - |
| | | Polyol 2 (T-400) | - | - | - | - |
| | | Polyol 3 (GR-16A) | - | - | - | - |
| | | Polyol 4 (T-880) | - | - | - | - |
| | | Polyol 5 (Diol-280) | 108.5 | 104.4 | 50.0 | 50 |
| | Catalyst | DBTDL | 0.4 | 0.4 | 0.5 | 0.1 |
| | | K-15 | - | - | - | 1.0 |
| | | JXP-509 | - | - | - | 3.0 |
| | Additive | Impact Absorption Particles | - | - | - | - |
| | Fiber | Carbon Fiber (CO6343) | - | - | - | - |
| Isocyanate Index ((NCO/OH) × 100) | | | 105 | 105 | 218 | 218 |
| Ratio of NCO Group Derived from Alicyclic Polyisocyanate in Total NCO Group (mol%) | | | 25.5 | 26.9 | 26.9 | 26.9 |
| Ratio of NCO Group Derived from MDI in Total NCO Group of p-MDI (mol%) | | | 42.8 | 67.1 | 67.1 | 67.1 |
| Evaluation | | Bending Elastic Modulus [MPa] | 2430 | 2620 | 2905 | 3460 |
| | | Compatibility | Excellent | Excellent | Excellent | Excellent |
| | | Tg [°C] | 130 | 135 | 142 | 157 |
| | | Pot Life [seconds] | 35 | 36 | 36 | 36 |
| | | Curing Time [seconds] | 40 | 40 | 40 | 40 |

### [Table 5]

**Table 5**

| No. | | | Ex. 23 | Ex. 24 | Ex. 25 | Ex. 26 | Ex. 27 | Ex. 28 |
|---|---|---|---|---|---|---|---|---|
| | Polyisocyanate Component | Isocyanate 1 (p-MDI) | 56.25 | 50 | 37.5 | 25 | 50 | 50 |
| | | Isocyanate 2 (p-MDI) | - | - | - | - | - | - |
| | | Isocyanate 3 (p-MDI) | - | - | - | - | - | - |
| | | Isocyanate 4 (p-MDI) | - | - | - | - | - | - |
| | | Isocyanate 5 (p-MDI) | - | - | - | - | - | - |
| | | Isocyanate 6 (NBDI) | - | - | - | - | - | - |
| | | Isocyanate 7 (1,3-H₆XDI) | - | - | - | - | - | - |
| | | Isocyanate 8 (1,4-H₆XDI) | 10 | 20 | 40 | 60 | 20 | 20 |
| | | Isocyanate 9 (IPDI) | - | - | - | - | - | - |
| Formulation | | Isocyanate 10 (modified p-MDI) | 33.75 | 30 | 22.5 | 15 | 30 | 30 |
| Mixing (parts by mass) | Polyol Component | Polyol 1 (T-300) | - | - | - | - | - | - |
| | | Polyol 2 (T-400) | - | - | - | - | - | - |
| | | Polyol 3 (GR-16A) | - | - | - | - | - | - |
| | | Polyol 4 (T-880) | - | - | - | - | - | - |
| | | Polyol 5 (Diol-280) | 50 | 50 | 50 | 50 | 50 | 50 |
| | Catalyst | DBTDL | 0.1 | 0.1 | 0.1 | 0.1 | 0.1 | 0.1 |
| | | K-15 | 1.0 | 1.0 | 1.0 | 1.0 | 1.0 | 1.0 |
| | | JXP-509 | 3.0 | 3.0 | 3.0 | 3.0 | 3.0 | 3.0 |
| | Additive | Impact Absorption Particles | - | - | - | - | - | - |
| | Fiber | Carbon Fiber (ECMF25) | - | - | - | - | - | 231.2 |
| Isocyanate Index ((NCO/OH) × 100) | | | 219 | 227 | 242 | 258 | 227 | 227 |
| Ratio of NCO Group Derived from Alicyclic Polyisocyanate in Total NCO Group (mol%) | | | 13.7 | 26.3 | 48.7 | 68.1 | 26.3 | 26.3 |
| Ratio of NCO Group Derived from MDI in Total NCO Group of p-MDI (mol%) | | | 58.1 | 58.1 | 58.1 | 58.1 | 58.1 | 58.1 |
| Evaluation | | Bending Elastic Modulus [MPa] | 3220 | 3500 | 3580 | 3300 | 3500 | 52000 |
| | | Compatibility | Excellent | Excellent | Excellent | Excellent | Excellent | Excellent |
| | | Tg [°C] | 158 | 155 | 140 | 135 | 155 | 152 |
| | | Pot Life [seconds] | 36 | 36 | 36 | 36 | 36 | 36 |
| | | Curing Time [seconds] | 40 | 40 | 40 | 40 | 40 | 40 |

The details of the abbreviations in Tables are shown in the following.

p-MDI: polyphenylmethane polyisocyanate (polymeric MDI)
MDI: diphenylmethane diisocyanate
NBDI: bis(isocyanatomethyl) norbornane
H₆XDI: bis(isocyanatomethyl) cyclohexane
IPDI: isophorone diisocyanate
T-300: ACTCOL T-300, polyoxypropylene polyol, number average molecular weight of 300, manufactured by Mitsui Chemicals, Inc., hydroxyl value of 550 mgKOH/g, average functionality = 3, viscosity at 25°C = 660 mPa·s
T-400: ACTCOL T-400, polyoxypropylene polyol, number average molecular weight of 400, manufactured by Mitsui Chemicals, Inc., hydroxyl value of 415 mgKOH/g, average functionality = 3, viscosity at 25°C = 410 mPa·s
GR-16A: ACTCOL GR-16A, polyoxypropylene polyol, number average molecular weight of 400, manufactured by Mitsui Chemicals, Inc., hydroxyl value of 555 mgKOH/g, average functionality = 4, viscosity at 25°C = 3500 mPa·s
T-880: ACTCOL T-880, polyoxypropylene polyol, number average molecular weight of 200, manufactured by Mitsui Chemicals, Inc., hydroxyl value of 875 mgKOH/g, average functionality = 3, viscosity at 25°C = 5000 mPa·s
Diol-280: ACTCOL Diol-280, polyoxypropylene polyol, number average molecular weight of 280, manufactured by Mitsui Chemicals, Inc., hydroxyl value of 400 mgKOH/g, average functionality = 2, viscosity at 25°C = 63 mPa·s
DBTDL: dibutyltin dilaurate, catalyst, manufactured by Tokyo Chemical Industry Co., Ltd.
K-15: DABCO K-15, catalyst, manufactured by Air Products Japan K.K.
JXP-509: DABCO JXP-509, catalyst, manufactured by Air Products Japan K.K.
CO6343: TORAYCA CO6343, carbon fiber woven fabrics, manufactured by TORAY INDUSTRIES, INC.
ECMF-25: carbon fiber woven fabrics, manufactured by FORMOSA TAFFETA CO., LTD.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### Industrial Applicability

The rigid polyurethane resin composition, the rigid polyurethane resin, and the molded article of the present invention are preferably used as the fiber reinforced plastic, the plastic for structural material, and the plastic for structural core material.

The fiber reinforced plastic of the present invention is preferably used as, for example, the structural members, the interior materials, the exterior materials, the wheels, and the spokes for vehicles (automobiles, aircrafts, motorcycles, bicycles), the outer shell materials for helmet, the robot members, the ship members, the yacht members, the rocket members, the office chairs, the health care members (nursing care leg, nursing care chair, bed, eyewear frame, or the like), the structural materials of wearable member, the sports goods (shaft of golf club, tennis racket frame, ski board, snowboard, or the like), the amusement members (roller coaster or the like), the construction materials for building and housing, the rolls for paper industry, the casings for electronic component (smartphone, tablet, or the like), the structures of power generator (thermal power generation, hydraulic power generation, wind power generation, nuclear power generation), and the structures of tank lorry or the like.

## Claims

1. A rigid polyurethane resin composition containing:
a polyisocyanate component containing polyphenylmethane polyisocyanate and alicyclic polyisocyanate, and a polyol component, wherein
in the polyisocyanate component,
the ratio of an isocyanate group derived from the alicyclic polyisocyanate
with respect to the total amount of an isocyanate group derived from the polyphenylmethane polyisocyanate and the isocyanate group derived from the alicyclic polyisocyanate
is 10 to 70 mol%.

2. The rigid polyurethane resin composition according to claim 1, wherein
the polyphenylmethane polyisocyanate contains diphenylmethane diisocyanate, and
the ratio of an isocyanate group derived from the diphenylmethane diisocyanate with respect to the total amount of the isocyanate group derived from the polyphenylmethane polyisocyanate is 30 mol% or more and 80 mol% or less.

3. The rigid polyurethane resin composition according to claim 2, wherein
the ratio of the isocyanate group derived from the diphenylmethane diisocyanate with respect to the total amount of the isocyanate group derived from the polyphenylmethane polyisocyanate is 30 mol% or more and 60 mol% or less.

4. The rigid polyurethane resin composition according to claim 1, wherein
the polyol component has
an average functionality of 2 or more and
an average hydroxyl value of 400 mgKOH/g or more.

5. The rigid polyurethane resin composition according to claim 4, wherein
the polyol component has an average functionality of 3 or more.

6. The rigid polyurethane resin composition according to claim 1, wherein
the alicyclic polyisocyanate is at least one kind selected from the group consisting of
1,3-bis(isocyanatomethyl) cyclohexane,
1,4-bis(isocyanatomethyl) cyclohexane,
2,5-di(isocyanatomethyl) bicyclo[2.2.1] heptane,
2,6-di(isocyanatomethyl) bicyclo[2.2.1] heptane, and
isophorone diisocyanate.

7. A rigid polyurethane resin containing a cured product of the rigid polyurethane resin composition according to claim 1.

8. A molded article made of the rigid polyurethane resin according to claim 7.

9. A fiber reinforced plastic made of
a fiber and
a cured product of the rigid polyurethane resin composition according to claim 1 impregnated with the fiber.

10. The fiber reinforced plastic according to claim 9, wherein
the fiber is made of at least one or more kinds selected from the group consisting of carbon fiber, glass fiber, and aramid fiber.

11. The fiber reinforced plastic according to claim 9 obtained by a RTM method, a HP-RTM method, and/or a RIM method.
